(19) Europäisches Patentamt
European Patent Office
Office européen des brevets

(11) **EP 1 597 124 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(21) Anmeldenummer: **04713047.1**

(22) Anmeldetag: **20.02.2004**

(51) Int Cl.:
**B60T 8/172** (2006.01)

(86) Internationale Anmeldenummer:
**PCT/EP2004/001666**

(87) Internationale Veröffentlichungsnummer:
**WO 2004/074057 (02.09.2004 Gazette 2004/36)**

(54) **VERFAHREN UND VORRICHTUNG ZUR COMPUTERGESTÜTZTEN SCHÄTZUNG DER MASSE EINES FAHRZEUGS, INSBESONDERE EINES NUTZFAHRZEUGS**

METHOD AND DEVICE FOR EFFECTING A COMPUTER-AIDED ESTIMATION OF THE MASS OF A VEHICLE, PARTICULARLY OF A GOODS-CARRYING VEHICLE

PROCEDE ET DISPOSITIF D'ESTIMATION ASSISTEE PAR ORDINATEUR DE LA MASSE D'UN VEHICULE, NOTAMMENT D'UN VEHICULE INDUSTRIEL

(84) Benannte Vertragsstaaten:
**AT BE BG CH CY CZ DE DK EE ES FI FR GB GR HU IE IT LI LU MC NL PT RO SE SI SK TR**

(30) Priorität: **21.02.2003 DE 10307511**

(43) Veröffentlichungstag der Anmeldung:
**23.11.2005 Patentblatt 2005/47**

(73) Patentinhaber: **KNORR-BREMSE Systeme für Nutzfahrzeuge GmbH**
**80809 München (DE)**

(72) Erfinder:
• **HECKER, Falk**
**71706 Markgröningen (DE)**
• **HORN, Matthias**
**70499 Stuttgart (DE)**
• **GÜCKER, Ulrich**
**71701 Schwieberdingen (DE)**
• **HUMMEL, Stefan**
**71191 Stuttgart (DE)**

(74) Vertreter: **Schönmann, Kurt**
**Knorr-Bremse AG**
**Moosacher Strasse 80**
**80809 München (DE)**

(56) Entgegenhaltungen:
DE-A- 19 859 022 US-B1- 6 314 383
US-B1- 6 347 269

**Beschreibung**

Stand der Technik

Die Erfindung betrifft ein Verfahren und eine Vorrichtung zur computergestützten Schätzung der Masse eines Fahrzeugs, insbesondere eines Nutzfahrzeugs gemäß Anspruch 1 und Anspruch 7.

Bei elektronischen Fahrzeugsystemen wie beispielsweise elektronischen Stabilitätssystemen (ESP) zur Regelung des Fahrverhaltens im fahrdynamischen Grenzbereich oder elektronisch geregelten Bremssystemen (EBS) für Nutzfahrzeuge wird generell ein Wert für die Masse des Fahrzeugs benötigt. Da zur Masseermittlung in der Regel keine Sensoren vorhanden sind, muss die Fahrzeugmasse durch geeignete Algorithmen berechnet bzw. geschätzt werden.

Die DE 42 28 413 A1 offenbart ein Verfahren zur Bestimmung der Fahrzeugmasse, bei welchem zwei Fahrzeuglängsbeschleunigungen zu wenigstens zwei unterschiedlichen Zeitpunkten und die zu diesen Zeitpunkten vorliegenden Vortriebskräfte erfasst werden. Aus der Differenz der Vortriebskräfte und der Differenz der Längsbeschleunigungen wird dann die Fahrzeugmasse bestimmt.

Gemäß der DE 198 02 630 A1 wird zur Bestimmung der Fahrzeugmasse die Vortriebskraft und die zugehörige Fahrzeuglängsbeschleunigung in kontinuierlich, mit konstanten Zeitabständen aufeinander folgenden Zeitpunkten erfasst.

Gemäß der US 6 314 383 B1 wird ebenfalls das Kräftegleichgewicht als Basis zur Masseschätzung eines Fahrzeugs herangezogen, wobei allerdings der Einfluss der durch eine Steigung oder ein Gefälle bedingten Kräfte nicht eliminiert wird, sondern diese Kräfte aus mehreren geschätzten Massewerten bestimmt werden.

Die DE 198 59 022 A1 zieht ebenfalls das Kräftegleichgewicht als Ausgangsbasis heran, bricht aber eine Berechnung in Betriebssituationen ab, in denen das Fahrzeug entlang einer Steigung oder eines Gefälle fährt und setzt bis dahin berechnete Werte für die Fahrzeugmasse ein.

Gemäß der WO 00/11439 A1 werden zur Ermittlung der Fahrzeugmasse mindestens zwei zeitlich versetzte Messungen ermittelt, beinhaltend eine Zugkraft-Größe und eine Bewegungsgröße des Fahrzeugs, wobei eine der beiden Messungen während einer zugkraftfreien und die andere während einer Zugkraftphase erfolgt.

Die gattungsbildende US 6 347 269 B1 schlägt vor, die Fahrzeugmasse auf der Basis der Vortriebskräfte, der Fahrwiderstände und der Fahrzeugbeschleunigung zu ermitteln, wobei der Einfluss der Fahrbahnneigung mittels eines Hochpassfilters eliminiert wird.

Aus der DE 101 44 699 A1 ist ein Verfahren bekannt, welches auf der Gleichgewichtsbeziehung zwischen der Antriebskraft einerseits und der Beschleunigungskraft und dem Steigungswiderstand basiert.

Diese Gleichgewichtsbeziehung lautet:

$$F = m \cdot (a + g \cdot \sin\alpha) \qquad (1)$$

mit

F    Antriebskraft,
a    zeitliche Ableitung der Fahrzeuglängsgeschwindigkeit,
$\alpha$    Steigungswinkel der Fahrbahn,
g    Erdbeschleunigung
m    Fahrzeugmasse

In Gleichung (1) wird die Beschleunigungskraft durch das Produkt $m \cdot a$ und der Steigungswiderstand durch das Produkt $m \cdot g \cdot \sin\alpha$ repräsentiert. Zur Berechnung der Masse m des Fahrzeugs wird die Gleichung (1) daher nach m aufgelöst und die momentanen Werte für F, a und $\alpha$ aus gemessenen Größen bestimmt. Da der Steigungswinkel $\alpha$ der jeweils befahrenen Fahrbahn nicht bekannt ist, wird er in der Regel während Kupplungsphasen oder während Phasen ohne bzw. sehr geringer Antriebskraft computergestützt geschätzt oder überhaupt vernachlässigt. Bei Einsatz von Wandlerkupplungen oder Lastschaltgetrieben sind solche Freilaufphasen jedoch nicht mehr vorhanden, so dass eine hinreichend genaue Abschätzung der Fahrzeugmasse schwierig ist.

Der vorliegenden Erfindung liegt demzufolge die Aufgabe zugrunde, ein Verfahren zur computergestützten Schätzung der Masse m eines Fahrzeugs der eingangs erwähnten Art derart weiterzubilden, dass die vorstehend genannten Nachteile vermieden werden und gleichzeitig eine höhere genanigkeit erreicht wird. Darüber hinaus soll eine Vorrichtung zur Anwendung des Verfahrens zur Verfügung gestellt werden.

Diese Aufgabe wird durch die Merkmale von Anspruch 1 und Anspruch 7 gelöst.

Es werden Änderungen des Betriebszustandes des Fahrzeugs über der Zeit t für die Schätzung der Fahrzeugmasse ausgewertet. Bei Fahrt eines Fahrzeugs entlang einer beliebigen Fahrstrecke ist der Steigungswinkel $\alpha$ der Fahrbahn eine Funktion der Zeit t. Differenziert man Gleichung (1) nach der Zeit t, ergibt sich die folgende Gleichung:

$$\dot{F} = m \cdot (\dot{a} + g \cdot \dot{\alpha} \cdot \cos\alpha) \qquad (2)$$

Unter der Annahme, dass die Änderung des Steigungswinkels $\alpha$ (t) im betrachteten Zeitintervall dt sehr klein ist, soll der Einfluss des Steigungswinkels $\alpha$ (t) minimiert bzw. eliminiert werden. Dann gilt $\ddot{a} = d\alpha/dt \approx 0$ und Gleichung (2) lautet wie folgt:

$$\dot{F} = m \cdot \dot{a} \quad (3)$$

Durch die zeitliche Ableitung von Gleichung (2) konnte in Gleichung (3) folglich der Einfluss des als zeitweise konstant angenommenen Steigungswinkels $\alpha$ in vorteilhafter Weise eliminiert werden, so dass der Steigungswinkel $\alpha$ nicht geschätzt, berechnet oder mittels eines kostenverursachenden Sensors gemessen werden müsste.
Gleichung (3) aufgelöst nach dem Schätzwert $\hat{m}$ der Fahrzeugmasse lautet dann:

$$\hat{m} = \frac{\dot{F}}{\dot{a}} \qquad (4)$$

Gleichung (4) bildet somit die Schätzgleichung für die Masse m des Fahrzeugs. Die Berechnung der Schätzgleichung erfolgt vorzugsweise kontinuierlich, beispielsweise mittels rekursiver Verfahren. Die verwendeten rekursiven Algorithmen können sog. Vergessensfaktoren beinhalten, mit denen sich das Verhalten des Algorithmus einstellen lässt. Die Vergessensfaktoren werden in geeigneten Situationen, z.B. während längerer Stillstandszeiten, in denen sich die Masse m des Fahrzeugs ändern könnte, in Richtung schnellere Konvergenz verstellt.
Zur Abschätzung von m gemäß Gleichung (4) sind die Größen F und a bzw. $\dot{F} = dF/dt$ und $\dot{a} = da/dt$ zu bestimmen.
Die Antriebskraft F beinhaltet unter anderem die bekannten Fahr- und Antriebswiderstände, entstehend beispielsweise durch Reibungsverluste im Motor und Getriebe etc., und/oder Dauerbremskräfte:

$$F = \frac{M \cdot \omega - \Theta \cdot \dot{\omega}}{v} \cdot \eta - 1/2\rho \cdot c_w \cdot A \cdot v^2 \quad (5)$$

mit:

M    Motormoment einschließlich Reibmoment
$\omega$    Motordrehzahl
$v$    Fahrzeuggeschwindigkeit
$A$    Stirnfläche des Fahrzeugs
$\eta$    Antriebsstrangwirkungsgrad
$\theta$    Trägheitsmoment des Motors
$\rho$    Dichte der Luft
$c_w$    Luftwiderstandsbeiwert.

Die Größen in Gleichung (5) beinhalten folglich fahrzeugspezifische Größen wie beispielsweise das Trägheitsmoment des Motors $\theta$, den Luftwiderstandsbeiwert $c_w$, die Stirnfläche $A$ und den Antriebsstrangwirkungsgrad $\eta$ des Fahrzeugs. Die fahrzeugspezifischen Größen sind vorzugsweise in einer Speichereinheit eines Steuergeräts des Fahrzeugs gespeichert. Weiterhin beinhaltet Gleichung (5) meßbare oder in dem Steuergerät des Fahrzeugs ständig abrufbare Größen betreffend die momentanen Fahrbedingungen des Fahrzeugs wie das Motormoment M, die Motordrehzahl ω, die Fahrzeuggeschwindigkeit ν und die Dichte ρ der Umgebungsluft. Aus den genanten Daten bzw. Größen kann eine Berechnungseinheit, vorzugsweise das Steuergerät des Fahrzeugs selbst, die Antriebskraft F und die Beschleunigung a berechnen.

Der Ausdruck $\dot{a}$ im Nenner von Gleichung (4) ist die Ableitung der Fahrzeugbeschleunigung a nach der Zeit t und wird als Ruck bezeichnet. Folglich kann eine Schätzung der Masse m nur während geeigneter Phasen erfolgen, in welchen da/dt und dF/dt ungleich 0 ist.

Die Differenziation der Größen F und a durch das Steuergerät erfolgt mit geeigneten Verfahren wie beispielsweise dem Zweipunkt-Differenziations-Verfahren oder einem Zustandsvariablen-Filter, wobei die Ableitung vorzugsweise über längere Zeitabstände erfolgt. Um die Genauigkeit der Schätzung zu verbessern, können die differenzierten Größen anschließend gefiltert werden. Vorzugsweise mittels eines Least-Square-Algorithmus wird dann der Schätzwert $\hat{m}$ für die Fahrzeugmasse wie folgt errechnet:

$$\hat{m} = \frac{\sum_{i=1}^{N} \dot{F}_i \cdot \ddot{v}_i}{\sum_{i=1}^{N} \ddot{v}_i \cdot \ddot{v}_i} \qquad (6)$$

mit i als Index für den i-ten Messwert. Die gemessenen Größen wie beispielsweise die Fahrgeschwindigkeit ν werden beispielsweise geeignet gewichtet, wobei die Gewichtung abhängig von der Genauigkeit der gemessenen Größen erfolgt. Weiterhin können die gemessenen Größen betreffend die momentanen Fahrbedingungen des Fahrzeugs abhängig von der Signalgüte gefiltert werden. Darüber hinaus können die Größen betreffend die momentanen Fahrbedingungen des Fahrzeugs mehrmals gemessen und die Messungen unterschiedlich gewichtet werden.

Aufgrund der shwankenden Qualität der Meßgrößen für die Fahrgeschwindigkeit ν und die Kraft F wird erfindungsgemäß sowohl ein Wert für $\hat{m}$ als auch der reziproke Wert $1/\hat{m}$ berechnet und ein gewichteter Mittelwert gebildet

Die Erfindung umfasst neben dem Verfahren auch eine Vorrichtung zur computergestützten Masseschätzung eines Fahrzeugs, insbesondere eines Nutzfahrzeugs. Diese Vorrichtung beinhaltend eine Berechnungseinheit zur Berechnung der Masse des Fahrzeugs und/ des reziproken Werts der Masse aus der Gleichgewichtsbeziehung zwischen der Antriebskraft F und den Fahrwiderständen, in welche als Berechnungsgrößen die Masse m und der Steigungswinkel α der Fahrbahn eingehen, nach einem computergestützten Differenzieren der Gleichgewichtsbeziehung nach der Zeit unter der Annahme, dass der Steigungswinkel α konstant ist. Diese Berechnungseinheit ist vorzugsweise in das Steuergerät des Fahrzeugs integriert.

### Patentansprüche

1. Verfahren zur computergestützten Schätzung der Masse eines Fahrzeugs, insbesondere eines Nutzfahrzeugs, basierend auf der Gleichgewichtsbeziehung zwischen der Antriebskraft F und der Summe aus Trägheitskraft und den Antriebswiderständen, in welcher als Größen die Masse m, die zeitliche Ableitung a der Fahrzeuglängsgeschwindigkeit und ein Steigungswinkel α der Fahrbahn enthalten sind, beinhaltend folgende Schritte:

   a) Computergestütztes Differenzieren der Gleichgewichtsbeziehung nach der Zeit t unter der Annahme, dass der Steigungswinkel α konstant ist;
   b) Berechnen der Masse m des Fahrzeugs aus der nach der Zeit differenzierten Gleichgewichtsbeziehung mittels eines Least Square Algorithmus, **gekennzeichnet durch** folgende weitere Schritte:
   c) Berechnen der reziproken Masse 1/m und Bilden eines gewichteten Mittelwerts aus der Masse m und der reziproken Masse 1/m.

2. Verfahren nach Anspruch 1, **dadurch gekennzeichnet, dass** die Antriebswiderstände durch die Summe einer von der Masse m abhängigen Beschleunigungs- oder Verzögerungskraft und einer vom Steigungswinkel α der Fahrbahn abhängigen Steigungs- oder Gefällekraft gebildet werden.

3. Verfahren nach Anspruch 1 oder 2, **dadurch gekennzeichnet, dass** die Antriebskraft F und die Beschleunigung oder Verzögerung a aus gemessenen Größen bestimmt werden.

**4.** Verfahren nach Anspruch 3, **dadurch gekennzeichnet, dass** die gemessenen Größen in einem Steuergerät des Fahrzeugs verfügbar sind.

**5.** Verfahren nach Anspruch 4, **dadurch gekennzeichnet, dass** die gemessenen Größen abhängig von der Signalgüte gefiltert werden.

**6.** Verfahren nach einem der Ansprüche 3 bis 5, **dadurch gekennzeichnet, dass** die gemessenen Größen F und a mehrmals gemessen und die Messungen unterschiedlich gewichtet werden.

**7.** Vorrichtung zur computergestützten Masseschätzung eines Fahrzeugs, insbesondere eines Nutzfahrzeugs, beinhaltend eine Berechnungseinheit zur Berechnung der Masse m des Fahrzeugs aus der Gleichgewichtsbeziehung zwischen der Antriebskraft F und der Summe aus Trägheitskraft und den Antriebswiderständen, in welche als Größen die Masse m, die zeitliche Ableitung a der Fahrzeuglängsgeschwindigkeit und ein Steigungswinkel α der Fahrbahn enthalten sind, wobei die Berechnungseinheit ausgebildet ist

a) zum computergestützten Differenzieren der Gleichgewichtsbeziehung nach der Zeit unter der Annahme, dass der Steigungswinkel α konstant ist,
b) zum Berechnen der Masse m des Fahrzeugs aus der nach der Zeit differenzierten Gleichgewichtsbeziehung mittels eines Least Square Algorithmus, **dadurch gekennzeichnet, dass**
c) die Berechnungseinheit weiterhin ausgebildet ist, die reziproke Masse 1/m zu berechnen und aus der Masse m und der reziproken Masse 1/m einen gewichteten Mittelwert zu bilden.

**8.** Vorrichtung nach Anspruch 7, **dadurch gekennzeichnet, dass** die Berechnungseinheit in ein Steuergerät des Fahrzeugs integriert ist.


**Claims**

**1.** Method for the computer-assisted estimation of the mass of a vehicle, in particular a commercial vehicle, on the basis of the equilibrium relationship between the driving force $F$ and the sum of the inertial force and the drive resistances in which the mass $m$, the time derivative $a$ of the longitudinal vehicle speed and an angle of inclination $α$ of the road surface are included as parameters, comprising the following steps:

(a) computer-assisted derivation of the equilibrium relationship as a derivative by time t, on the assumption that the angle of inclination $α$ is constant;

(b) computation of the mass $m$ of the vehicle from the time-derived equilibrium relationship $m = \dfrac{dF/dt}{da/dt}$ by means of a least square algorithm, **characterized by** the following further steps:
(c) computation of the reciprocal mass 1/$m$ and generation of a weighted mean value from the mass $m$ and the reciprocal mass 1/$m$

**2.** Method according to Claim 1, **characterized in that** said drive resistances are formed by the sum of an acceleration or deceleration force dependant on the mass $m$ and an inclination or gradient force dependent on the angle of inclination $α$ of the road surface.

**3.** Method according to Claim 1 or 2, **characterized in that** said drive force $F$ and said acceleration or deceleration $a$ are determined from parameters as measured.

**4.** Method according to Claim 3, **characterized in that** said parameters as measured are available in a controller of the vehicle.

**5.** Method according to Claim 4, **characterized in that** said parameters as measured are filtered in dependence on the signal quality.

**6.** Method according to any of the Claims 3 to 5, **characterized in that** said parameters as measured $F$ and $a$ are measured several times and that the measurements are weighted in different forms.

**7.** Device for the computer-assisted estimation of the mass of a vehicle, in particular a commercial vehicle, comprising a computing unit for computing the mass m of the vehicle from the equilibrium relationship between the driving force $F$ and the sum of the inertial force and the drive resistances in which the mass $m$, the time derivative $a$ of the longitudinal vehicle speed and an angle of inclination $\alpha$ of the road surface are included as parameters, with said computing unit being configured:

(a) for computer-assisted derivation of said equilibrium relationship as a time derivative, on the assumption that said angle of inclination $\alpha$ is constant,

(b) for computing the mass $m$ of the vehicle from the time-differentiated equilibrium relationship $m = \dfrac{dF / dt}{da / dt}$ by means of a least square algorithm, **characterized in that**
(c) said computing unit is moreover configured for computing the reciprocal mass 1/$m$ and for generating a weighted mean value from the mass $m$ and the reciprocal mass 1/$m$.

**8.** Device according to Claim 7, **characterized in that** said computing unit is integrated into a controller of the vehicle.


**Revendications**

**1.** Procédé d'estimation assistée par ordinateur de la masse d'un véhicule, en particulier d'un véhicule utilitaire, sur la base de la relation d'équilibre entre tween the effort d'entraînement $F$ et la somme de la force d'inertie et les résistances d'entraînement, renfermant la masse $m$, la dérivée par rapport au temps $a$ de la vélocité longitudinale du véhicule et d'un angle d'inclinaison $\alpha$ de la voie de circulation en tant que paramètres, comprenant les étapes suivantes :

(a) dérivation assistée par ordinateur de la relation d'équilibre en tant que dérivée par rapport au temps $t$, sous l'hypothèse que l'angle d'inclinaison $\alpha$ soit constant;

(b) calcul de la masse $m$ du véhicule à partir de la dérivée de la relation d'équilibre $m = \dfrac{dF / dt}{da / dt}$ par rapport au temps moyennant d'un algorithme des moindres carrés, **caractérisé par** les étapes additionnelles suivantes :
(c) calcul de la masse réciproque 1/$m$ et formation d'une valeur moyenne pondérée de la masse $m$ et de la masse réciproque 1/$m$

**2.** Procédé selon la revendication 1, **caractérisé en ce que** lesdites résistances d'entraînement sont formées par la somme d'un effort d'accélération ou de décélération en fonction de la masse $m$ et d'un effort d'inclinaison ou de gradient en fonction de l'angle d'inclinaison $\alpha$ de la voie de circulation.

**3.** Procédé selon la revendication 1 ou 2, **caractérisé en ce que** ledit effort d'entraînement $F$ et ladite accélération ou décélération $a$ sont déterminés à partir des paramètres mesurés.

**4.** Procédé selon la revendication 3, **caractérisé en ce que** lesdits paramètres mesurés sont disponibles dans un bloque contrôleur du véhicule.

**5.** Procédé selon la revendication 4, **caractérisé en ce que** lesdits paramètres mesurés subissent un filtrage en fonction de la qualité des signaux.

**6.** Procédé selon une quelconque des revendications 3 à 5, **caractérisé en ce que** lesdits paramètres mesurés $F$ et $a$ sont mesurés plusieurs fois et **en ce que** les mesures sont pondérées de façons différentes.

**7.** Dispositif pour l'estimation assistée par ordinateur de la masse d'un véhicule, en particulier d'un véhicule utilitaire, comprenant une unité ordinatrice pour la calcul de la masse m du véhicule à partir de la relation d'équilibre entre l'effort d'entraînement $F$ et la somme de la force d'inertie et les résistances d'entraînement, renfermant la masse $m$, la dérivée par rapport au temps $a$ de la vélocité longitudinale du véhicule et d'un angle d'inclinaison $\alpha$ de la voie de circulation en tant que paramètres, à ladite unité ordinatrice étant configurée :

(a) pour la dérivation assistée par ordinateur de ladite relation d'équilibre en tant que dérivée par rapport au temps, sous l'hypothèse que ledit angle d'inclinaison $\alpha$ soit constant,

(b) pour le calcul de la masse $m$ du véhicule à partir de la relation d'équilibre dérivée par rapport au temps

$$m = \frac{dF/dt}{da/dt}$$ moyennant d'un algorithme des moindres carrées, **caractérisé en ce que**

(c) ladite unité ordinatrice est, au plus, configurée pour le calcul d'une masse réciproque $1/m$ et pour la formation d'une valeur moyenne pondérée à partir de la masse $m$ et la masse réciproque $1/m$.

**8.** Dispositif selon la revendication 7, **caractérisé en ce que** ladite unité ordinatrice est intégrée dans un bloque contrôleur du véhicule.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4228413 A1
- DE 19802630 A1
- US 6314383 B1
- DE 19859022 A1
- WO 0011439 A1
- US 6347269 B1
- DE 10144699 A1